# EUROPEAN PATENT APPLICATION

(11) **EP 2 629 260 A1**
(43) Date of publication of application: **21.08.2013**
(21) Application number: 12166609.3
(22) Date of filing: 03.05.2012
(51) Int. Cl.: G06Q 30/02, G01C 21/36

(54) **Method for submitting advertisement information in a vehicle**

(30) Priority: 17.02.2012 DE 102012003211
(71) Applicant: Johnson Controls Automotive Electronics GmbH, 75196 Remchingen (DE)
(72) Inventor: Bulkan, Ozgur, 1784 Sofia (BG)
(74) Representative: Liedtke, Markus

(57) **Abstract**

The invention relates to a method for submitting advertisement information in a vehicle, the method comprising:
- acquiring an acoustical input of a user in a first step (S1),
- processing the acquired acoustical input of the user in a second step (S2),
- visually and/or acoustically outputting advertisement information depending on the acquired, processed user input.

## Description

The invention relates to a method for submitting advertisement information in a vehicle.

Acoustically submitting advertisement information in a vehicle via radio broadcasting is known in the art. Likewise, it is known in the art to submit advertisement information visually and/or acoustically by a satellite navigation device or by other suitable devices with display units arranged in the vehicle, respectively.

The object of the present invention with respect to the prior art is to provide an improved method for submitting advertisement information in a vehicle.

According to the invention the object is achieved by a method for submitting advertisement information in a vehicle, wherein in a first step an acoustic input is performed by a user. In a second step the acoustic input is processed, respectively. In a third step at least one advertisement information is output visually and/or acoustically depending on the processed acoustical input of the user.

By means of the acoustical input the user utters a request or a command to an electronic arrangement arranged in the car, wherein the electronic device acquires and processes the acoustical input, respectively. For this purpose, a program sequence is implemented on the electronic arrangement, which preferably acts more intelligent and automatically such that user instructions are correctly interpreted.

Advantageously in order to process the acoustical user input the processing unit is wirelessly connected with external services, for example restaurants, cinemas, shopping malls, and travel services, e.g. for providing information on flights, hotels, sights and the like.

The external services may be implemented on an electronic arrangement or be accessible via an electronic network, e.g. the internet, in a particularly preferred embodiment external online services such that up-to-date advertisement information on the above mentioned example topics may be issued at any time.

The acoustical input may be acquired by an electronic arrangement with an implemented voice recognition program.

The electronic arrangement may be wirelessly coupled to external services by programming interfaces.

The external service may be a web-enabled service.

The electronic arrangement may be a satellite navigation system.

Positions of the services on the current route may be acquired by the electronic arrangement and output visually and/or acoustically on a display unit or on loudspeakers, respectively.

The advertisement information to be output may be acquired from the external services.

In an exemplary embodiment a video visually and acoustically submitting an up-to-date offer of a nearby service may be played back on the display of the navigation device.

The present invention will be described in more detail with respect to the accompanying drawings.

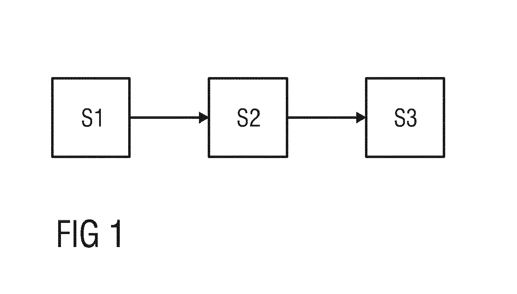

- Figure 1: is a schematic view of a simplified block diagram showing the course of a method according to the invention for submitting advertisement information in a vehicle.

Figure 1 shows a simplified block diagram of a course of a method according to the invention for submitting advertisement information in a vehicle.

In a first step of the method S1 an acoustical input to an electronic arrangement, e.g. a navigation device, is performed by a user located in the vehicle.

In an exemplary embodiment the acoustical input comprises the following context: "I am hungry. Which restaurants are on my route?".

The electronic arrangement acquires the acoustical input by means of a respective voice recognition program implemented on the electronic arrangement.

Furthermore, a program sequence for processing the acquired acoustical input of the user in a second step S2 of the method is implemented on the electronic arrangement.

For this purpose the electronic arrangement is wirelessly coupled via respective programming interfaces to external services, preferably web-enabled external services. Regarding the above mentioned example of the acoustical input the electronic arrangement acquires positions of restaurants respectively located on the current route and outputs them visually and/or acoustically on a display unit or on loudspeakers, respectively.

Furthermore, the electronic arrangement acquires up-to-date advertisement information of the external services and outputs them visually and/or acoustically depending on the acoustical input of the user. For example, a video visually and acoustically submitting an up-to-date offer of a nearby restaurant is played back on the display of the navigation device.

Thus, it is possible, that e.g. the driver orders online at a restaurant of his choice.

The described method allows for submitting advertisement information depending on user interest in an advantageous manner. Due to the acoustical input the method is particularly suitable for users, which are in any way distracted or busy, for example a driver when operating the vehicle.

### List of References

- S1: first step of the method
- S2: second step of the method
- S3: third step of the method

## Claims

1. Method for submitting advertisement information in a vehicle, the method comprising:
- acquiring an acoustical input of a user in a first step (S1),
- processing the acquired acoustical input of the user in a second step (S2),
- visually and/or acoustically outputting advertisement information depending on the acquired, processed user input.

2. Method according to claim 1, wherein the acoustical input is acquired by an electronic arrangement with an implemented voice recognition program.

3. Method according to claim 2, wherein the electronic arrangement is wirelessly coupled to external services.

4. Method according to claim 3, wherein the electronic arrangement is wirelessly coupled to external services by programming interfaces.

5. Method according to one of the claim 3 or 4, wherein the external service is a web-enabled service.

6. Method according to one of the claims 2 to 5, wherein the electronic arrangement is a satellite navigation system.

7. Method according to claim 3, wherein the external service is implemented on an electronic arrangement.

8. Method according to one of the claims 3 to 7, wherein the external service is one of a restaurant, cinema, shopping mall or travel service.

9. Method according to one of the claims 6 or 8, wherein positions of the services on the current route are acquired by the electronic arrangement and output visually and/or acoustically on a display unit or on loudspeakers, respectively.

10. Method according to one of the claims 1 to 9, wherein advertisement information to be output is acquired from the external services.

11. Method according to claim 10, wherein a video visually and acoustically submitting an up-to-date offer of a nearby service is played back on the display of the navigation device.
